# FASCICULE DE BREVET EUROPEEN

(11) **EP 1 951 418 B1**
(45) Date de publication et mention de la délivrance du brevet: **06.11.2019**
(21) Numéro de dépôt: 06793821.7
(22) Date de dépôt: 26.09.2006
(51) Int. Cl.: B01J 3/00, B01J 19/18, A62D 3/00, C02F 3/30, B01J 19/02, B01D 35/027

(54) **PROCEDE POUR LE TRAITEMENT EN ANOXIE D'UNE MATIERE DANS UN MILIEU REACTIONNEL FLUIDE**
VERFAHREN ZUR ANOXIEBEHANDLUNG EINER SUBSTANZ IN EINEM FLÜSSIGEN REAKTIONSMEDIUM
METHOD FOR ANOXIA TREATMENT OF A SUBSTANCE IN A FLUID REACTION MEDIUM

(30) Priorité: 28.09.2005 FR 0552926
(43) Date de publication de la demande: 06.08.2008
(73) Titulaire: Commissariat à l'Énergie Atomique et aux Énergies Alternatives, 75015 Paris (FR)
(72) Inventeur: TURC, Hubert-Alexandre, F-30133 Les Angles (FR); JOUSSOT-DUBIEN, Christophe, F-30650 Rochefort Du Gard (FR)
(74) Mandataire: Ahner, Philippe
(86) Numéro de dépôt international: PCT/EP2006/066724
(87) Numéro de publication internationale: WO 2007/036512

(56) Documents cités:
- FR-A- 2 814 967
- US-A- 3 649 534
- US-A- 4 564 458
- US-A- 5 421 998
- US-A- 5 536 385
- US-A- 5 552 039

## Description

L'invention concerne un procédé selon la revendication 1.

Dans le domaine des procédés sous pression pour le traitement de matières, en particulier de déchets, on identifie deux grandes familles de procédés utilisant l'eau comme milieu réactionnel : les procédés d'oxydation par voie humide (OVH) et les procédés d'oxydation hydrothermale (OHT). L'OVH se caractérise par des conditions de température et de pression inférieures aux conditions critiques de l'eau. Elle opère de ce fait en conditions diphasiques et conduit à des cinétiques de minéralisation d'un, voire deux ordres de grandeurs plus longues que celle obtenues en OHT.

Les procédés d'oxydation hydrothermales (OHT) dans l'eau supercritique utilisent les propriétés particulières de l'eau pour une pression et une température supérieures à 221 bar et 374°C et en particulier sa faible constante diélectrique permettant la solubilisation de composés hydrophobes, ses faibles densité et viscosité permettant le mélange en toutes proportions avec des composés gazeux. Le milieu réactionnel obtenu permet un mélange intime et homogène entre des composés organiques et l'oxygène faisant fonction de carburant et de comburant dans la réaction de minéralisation qui peut alors s'amorcer spontanément grâce à la température du milieu. Les gaz tels que O₂, CO₂, N₂ sont totalement solubles dans l'eau ainsi que de nombreux alcanes. Ces combustions peuvent alors se dérouler sans la limitation de transfert interphase généralement observée aux basses températures ou aux basses pressions, comme dans les incinérateurs ou les procédés d'oxydation par voie humide et conduire à une minéralisation totale de la matrice organique en des temps de séjour de l'ordre de la minute. Les procédés d'OHT sont donc particulièrement adaptés au traitement de déchets nécessitant une destruction totale de leur matrice organique.

On connaît déjà (FR-2 814 967) un procédé et un réacteur de ce type. Le réacteur comporte un corps dans lequel est disposé un tube interne qui délimite extérieurement une zone annulaire avec le corps et intérieurement, une zone centrale appelée lumière. Le tube interne comporte une première extrémité fixée à une première extrémité du corps et une seconde extrémité qui laisse subsister un passage de communication entre la zone annulaire et la zone centrale. Selon le procédé, les constituants du milieu supercritique, à savoir l'eau et un oxydant, sont introduits au voisinage de la première extrémité du réacteur sous une pression supérieure à 22,1MPa. Ils sont chauffés à une température supérieure à 374°C dans la zone annulaire puis introduits dans le tube interne au niveau de la deuxième extrémité du réacteur en même temps que la matière à traiter. Un mélange du fluide eau/oxydant sous pression chauffé et de la matière à traiter est oxydé dans une première partie du tube interne puis refroidi dans une deuxième partie de ce tube.

Un procédé et un réacteur de ce type ne sont pas adaptés à la neutralisation de certains composés du déchet qui sont dans un degré d'oxydation déjà élevé, notamment les nitrates. US-A-5 552 039 décrit un procédé de traitement de matières à hautes température et pression.

L'invention a pour objet procédé qui remédie à ces inconvénients.

Ces buts sont atteints, conformément à l'invention, par le fait que le point d'introduction de l'oxydant dans la zone réactionnelle du réacteur est situé en aval de l'entrée de la matière à traiter et est espacé de cette dernière d'une certaine distance de manière à définir une zone d'anoxie comprise entre l'entrée de la matière à traiter et le point d'introduction de l'oxydant, zone dans laquelle le milieu fluide est en anoxie. Une zone d'oxydation est située en aval de la zone d'anoxie, zone dans laquelle la réaction d'oxydation des déchets est parachevée.

La matière à traiter peut être introduite sous forme liquide comme dans le cas du procédé décrit dans le brevet FR-2 814 967. Elle peut alors être introduite par une simple pompe autonome. On peut également, selon l'invention, augmenter la variabilité de la nature des déchets à traiter. Ainsi, la matière peut aussi être introduite sous forme de particules solides en suspension.

Selon le procédé, on effectue l'introduction de l'oxydant de la zone réactionnelle en un point d'introduction situé en aval de l'entrée de la matière à traiter et espacé de cette dernière d'une certaine distance de manière à définir une zone d'anoxie comprise entre l'entrée de la matière à traiter et le point d'introduction de l'oxydant, zone dans laquelle le milieu fluide est en anoxie.

Le procédé de l'invention permet la réaction de tous les composés du déchet, en particulier des nitrates.

La matière organique que le déchet contient est oxydée par les nitrates. Ces derniers sont réduits et donc convertis en N₂ stable dans les conditions de l'OHT. Ainsi la zone d'anoxie permet de réduire des espèces oxydantes (par exemple les nitrates) par une réaction avec les déchets. Les espèces oxydantes se réduisent au contact des déchets qui, eux, s'oxydent.

De plus, la zone d'oxydation située en aval de la zone d'anoxie permet de finir complètement la réaction d'oxydation des déchets indépendamment des quantités des réactifs. En effet, généralement la quantité des espèces oxydantes n'est pas suffisante, ni le temps de contact assez long pour que tous les déchets soient oxydés. Le fait d'ajouter un oxydant (par exemple de l'air) permet de parachever laréaction d'oxydation. On obtient donc un double résultat : d'une part la réduction des nitrates dans la zone d'anoxie, mais aussi l'oxydation de tout le déchet dans la zone d'oxydation.

Le réacteur comporte un tube interne lié de manière étanche au corps à une première extrémité, le volume intérieur du tube interne délimitant une zone centrale, le tube interne délimitant une zone annulaire avec le corps, un passage de communication entre la zone centrale du tube et la zone annulaire étant prévu à une seconde extrémité du tube interne, une entrée de la matière à traiter qui débouche dans la zone centrale du tube interne, du côté de sa première extrémité, une entrée de l'oxydant qui peut déboucher dans la zone annulaire, le point d'introduction de l'oxydant étant situé au voisinage de la seconde extrémité du tube interne.

D'autres caractéristiques et avantages de l'invention apparaîtront encore à la lecture de la description qui suit d'un exemple de réalisation donné à titre illustratif en référence aux figures annexées. Sur ces figures :
- la figure 1 est une vue en coupe longitudinale d'un réacteur conforme à la présente invention ;

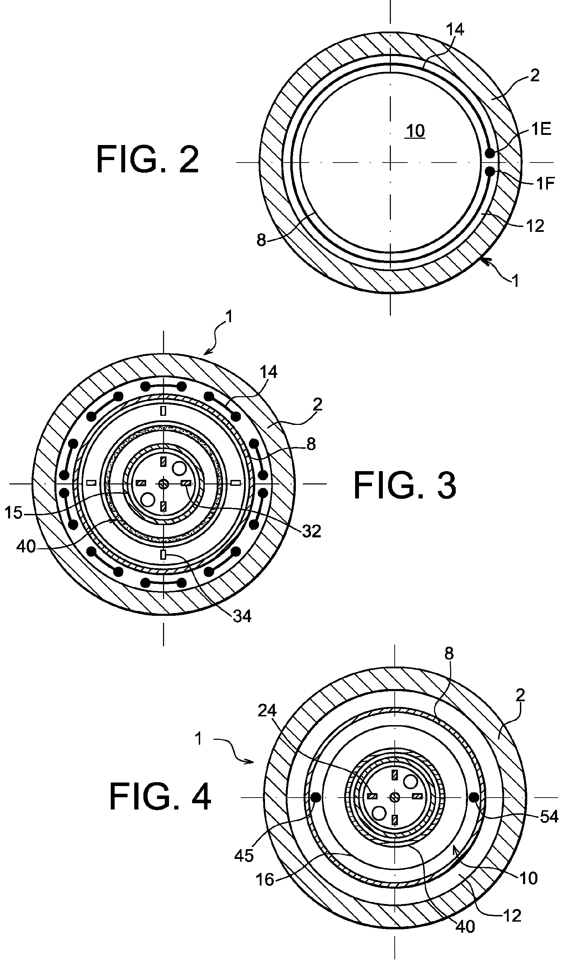

- la figure 2 est une vue en coupe selon la ligne II-II de la figure 1,
- la figure 3 est une vue en coupe du réacteur de la figure 1 selon la ligne III-III ;
- la figure 4 est une vue en coupe selon la ligne IV-IV du réacteur représenté sur la figure 1.

Sur les figures, le réacteur, désigné par la référence générale 1, est constitué d'un corps 2 de forme générale cylindrique d'axe XX fermé à sa partie supérieure par un fond et à sa partie inférieure par un couvercle 4.

L'extrémité inférieure du réacteur 1 est maintenue froide par une double enveloppe 6 dans laquelle circule un fluide de refroidissement, par exemple de l'eau. Cette disposition permet d'assurer l'étanchéité à haute pression à froid entre le corps 2 et le couvercle 4 par un joint en viton ou de type métallique.

Une enveloppe protectrice 8 est disposée à l'intérieur du corps 2 et espacée de celui-ci de manière à délimiter, intérieurement, une zone réactionnelle 10 et, extérieurement, une zone de confinement 12 isolées l'une de l'autre de manière étanche.

L'enveloppe protectrice 8 présente une forme générale cylindrique borgne à son extrémité supérieure. Elle est montée de manière coaxiale au corps 2 du réacteur et est dimensionnée de telle sorte que les jeux sur le diamètre et la longueur de l'enveloppe puissent être minimisés. Elle est réalisée en un matériau non poreux mais résistant à la corrosion comme le titane.

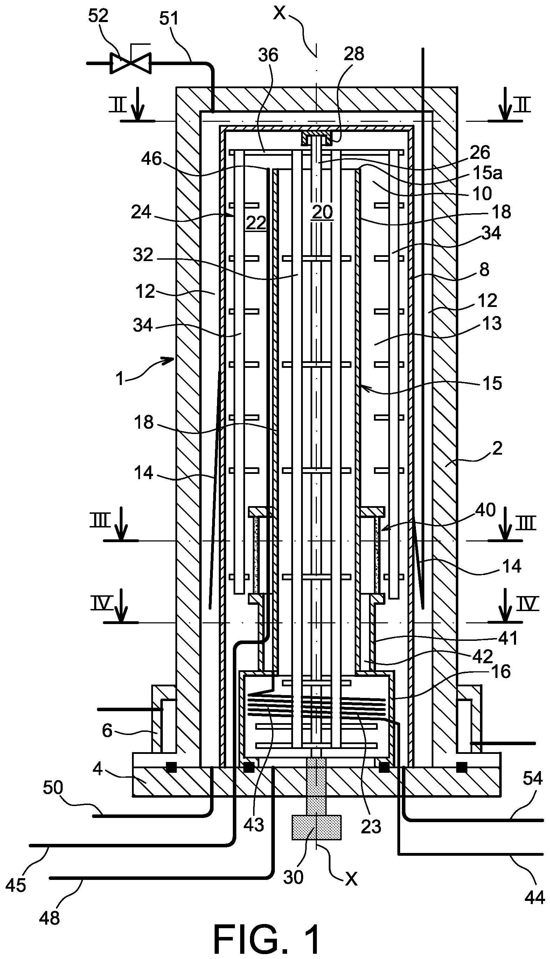

La fixation de cette enveloppe peut être réalisée sur le couvercle, comme représenté sur la figure 1, ou sur le corps 2 du réacteur. L'étanchéité entre l'enveloppe et le corps et le couvercle est assurée à froid par un joint en viton, par exemple.

Un échangeur de chaleur primaire 14 est prévu dans la zone annulaire 12. La circulation d'un fluide caloporteur dans l'échangeur primaire 14 permet le chauffage ou l'extraction de puissance thermique. Elle permet également de contrôler les gradients thermiques le long du réacteur. Toutefois, le circuit sur lequel l'échangeur est prévu ne fait pas partie de l'invention. Il ne sera donc pas décrit en détail.

L'utilisation de l'enveloppe protectrice 8 baignant de part et d'autre dans un fluide sous pression permet d'utiliser des tuyauteries en acier inoxydable pour réaliser l'échangeur de chaleur interne 14 qui est soumis à une contrainte de compression et non de traction comme le matériau du réacteur. Les parois de l'échangeur peuvent donc être minces, tout comme celles de l'enveloppe protectrice et le transfert de chaleur entre le milieu réactionnel et le fluide caloporteur est grandement amélioré par rapport à une configuration plus classique où l'échangeur est placé sur la paroi externe du réacteur.

Un tube interne désigné dans son ensemble par la référence 15, est disposé dans la zone réactionnelle 10 coaxialement à l'axe XX du corps. Il comporte une partie inférieure 16 de plus grand diamètre et une partie supérieure 18 de plus petit diamètre. Le tube 15 comporte une extrémité ouverte 15a qui ménage un passage de communication entre la zone centrale 20 et la zone annulaire 22.

Une turbine d'agitation 24, disposée dans la zone réactionnelle 10 comporte un axe 26 central d'axe XX guidé en rotation par un centreur 28 solidaire de l'enveloppe protectrice 8. La turbine est mise en rotation, par exemple au moyen d'un entraînement magnétique 30 monté sur le couvercle 4. Elle comporte des pales 32 parallèles à l'axe 26 disposées dans le tube interne 18 et des pales 34, également parallèles à l'axe 26 disposées dans la zone annulaire réactive 22. Les pales 32 de la zone centrale 20 et les pales 34 de la zone annulaire 22 sont reliées par un accouplement 36.

Les transferts de chaleur de et vers l'échangeur primaire 14 sont améliorés si l'écoulement des fluides dans la zone annulaire réactionnelle 22 est turbulent. Ce point est garanti par l'agitation au moyen des pales 34. L'homogéité dans la zone réactionnelle est également garantie par ce dispositif, même dans le cas où les mouvements de fluide sont limités dans le sens de l'écoulement pour approcher une distribution de temps de séjour semblable à celle qui existe dans un écoulement de type piston. La turbine d'agitation 24 permet donc de découpler le transfert de chaleur de l'écoulement du fluide procédé.

La totalité des équipements internes à la zone réactionnelle opère à une quasi-équipression ce qui permet de retenir des matériaux et des géométries sans avoir à tenir compte d'impératifs de tenue mécanique à la pression. Le tube injecteur de déchets, l'injecteur d'oxydant et l'échangeur de sortie sont réalisés en des matériaux résistants à la corrosion d'OHT, comme le titane et leurs épaisseurs peuvent être minimisées pour améliorer le transfert thermique dont ils sont le siège.

Un dispositif de filtration cylindrique 40 est monté coaxialement au tube interne d'injection 15 et plus précisément, à la partie 18 de plus petit diamètre de ce tube. Le dispositif de filtration 40 est prolongé vers le bas par une virole 41 également coaxiale à l'axe XX du tube d'injection 15 et qui délimite un espace annulaire 42 avec le tube 15.

Un tube 43 enroulé en serpentin formant un échangeur de chaleur débouche à une extrémité dans la zone annulaire 42 et à une autre extrémité 44 à l'extérieur du réacteur 1.

Une canalisation 45 pour l'amenée d'un oxydant, par exemple de l'air sous pression, traverse le couvercle 4 au niveau de la zone annulaire réactionnelle 22. La canalisation 45 s'étend, sensiblement parallèlement à l'axe XX sur toute la longueur du tube interne 15 de manière à présenter une extrémité 46 qui débouche au voisinage de l'extrémité supérieure 15a de ce tube.

Le déchet à traiter pénètre sous pression et au débit nominal par une canalisation 48 qui traverse le couvercle 4 pour déboucher à l'intérieur de la zone centrale réactionnelle 20. Enfin, une canalisation 50 permet d'introduire un milieu fluide sous pression par exemple de l'eau, dans la zone de confinement 12. Avantageusement la zone de confinement est en sur pression par rapport à la zone réactionnelle, ce qui permet de détecter une rupture de l'étanchéité de l'enveloppe protectrice.

Une canalisation 51 sur laquelle est montée une vanne de purge de fluide 52 est montée à la partie supérieure du corps 2.

Enfin, une canalisation 54 traverse le couvercle au niveau de la zone réactionnelle 52.

Le procédé de traitement de la matière se déroule de la manière suivante.

La matière à traiter pénètre dans la zone centrale 20 par la canalisation 48 à la pression et au débit nominal sous forme entièrement liquide, ou sous la forme d'une suspension aqueuse contenant des particules de matière solides en suspension. La matière à traiter se réchauffe en circulant à contre courant de l'effluent fluide qui circule dans l'échangeur 43 disposé dans la partie de plus grand diamètre 16 du tube d'injection 15. La matière à traiter parcourt ensuite la partie de plus petit diamètre 18 du tube d'injection de son extrémité inférieure jusqu'à son extrémité ouverte 15a. Etant donné que l'extrémité 46 du tube permettant l'injection d'un oxydant dans la zone réactionnelle 10 débouche au voisinage de l'extrémité 15a du tube d'injection, toute la zone centrale 20 est en condition d'anoxie. Il est possible d'optimiser l'emplacement de l'injecteur d'oxydant 46 et d'exploiter une partie de la zone réactionnelle en conditions supercritiques mais en anoxie. Selon la position de l'injection d'air, le déchet contenu dans la zone d'injection centrale peut être maintenu intégralement, partiellement ou pas du tout en conditions anoxiques avant que ne commence la combustion oxydante.

L'oxydant peut être introduit sous forme gazeuse (air ou air enrichi en oxygène, ozone, etc) ou liquide (oxygène liquide, peroxyde d'hydrogène, etc.).

Le but de cette configuration est de permettre la réaction de certains composés du déchet afin d'assurer leur élimination. Par exemple, dans le cas où le déchet organique contient des nitrates devant être éliminés, la matière organique qu'il contient est oxydée par ceux-ci, lesquels sont convertis en N₂ stable dans les conditions de OHT. L'oxydation qui s'en suit, après l'ajout d'oxydant au niveau de l'extrémité du tube 15a, ne conduit pas à une nouvelle production de nitrates mais à la transformation des autres composés organiques, notamment les espèces carbonées, en CO₂. Il est ainsi possible d'éliminer certains déchets qui ne le seraient pas avec un procédé d'OHT traditionnel.

Ainsi, l'invention s'applique avantageusement au traitement des effluents agricoles. L'utilisation d'une zone anoxique du réacteur permet la destruction d'effluents nitratés sans production d'espèces azotées dans les effluents. La séparation d'une saumure concentrant les minéraux et dégageant un flux majoritaire d'effluent aqueux épuré, permet l'application de ce traitement aux effluents des élevages intensifs tels que les lisiers, riches en nitrates et phosphates. La conception de procédés d'OHT valorisant l'énergie des déchets et dont la dimension peut être adaptée au cas par cas, conduit à envisager la création de petites unités intégrées à l'exploitation d'élevage, et exploitée en lieu et place des habituelles actions d'épandage réalisés par les éleveurs, et participant à la production d'énergie nécessaire à l'installation.

La matière à traiter parcours ensuite la zone annulaire réactionnelle 22 de haut en bas jusqu'au filtre microporeux 40. L'agitateur à pales droites 24 permet de garantir des conditions de turbulences telles que la filtration est assurée dans des conditions analogues à une filtration tangentielle et non comme une filtration de type frontal en évitant la formation d'un gâteau, c'est-à-dire d'une accumulation de matière solide devant le filtre. La formation de ce gâteau est classique en filtration frontale. Elle diminue fortement la capacité filtrante de l'élément. Dans le régime turbulent recherché dans le réacteur de l'invention, un flux tangentiel au filtre est maintenu pour éviter cette accumulation de matière et garantir ainsi une efficacité de filtration la plus constante possible au cours du temps.

## Revendications

1. Procédé de traitement par oxydation de déchets contenant une matière organique et des nitrates dans un milieu réactionnel comprenant de l'eau à l'état supercritique à une pression supérieure à 221 bars et à une température supérieure à 374°C dans un réacteur comprenant un corps (2) délimitant une zone réactionnelle (10), une entrée (48) de la matière à traiter dans la zone réactionnelle (10), un point d'introduction (46) d'un oxydant dans la zone réactionnelle (10), au moins une sortie de la matière traitée hors de la zone réactionnelle (10), la matière à traiter suivant un trajet défini dans la zone réactionnelle entre son entrée et sa sortie, le point d'introduction (46) de l'oxydant dans la zone réactionnelle (10) étant situé en aval de l'entrée (48) de la matière et est espacé de cette dernière d'une certaine distance de manière à définir une zone d'anoxie (20) comprise entre l'entrée de la matière à traiter et le point d'introduction de l'oxydant, zone dans laquelle le milieu fluide est en anoxie, le réacteur comprenant un tube interne (15) lié au corps (2) à une première extrémité, le volume intérieur du tube interne délimitant une zone centrale (20), le tube interne délimitant une zone annulaire (22) avec le corps (2), un passage de communication entre la zone centrale (20) du tube et la zone annulaire (22) étant prévu à une seconde extrémité (15a) du tube interne, l'entrée (48) de la matière à traiter débouchant dans la zone centrale (20) du tube interne, du côté de sa première extrémité, le point d'introduction (46) de l'oxydant étant situé au voisinage de la seconde extrémité (15a) du tube interne, la zone d'oxydation étant située en aval de la zone d'anoxie (20) dans la zone annulaire (22), le procédé de traitement comprenant les étapes suivantes : - introduction d'une matière à traiter dans la zone réactionnelle (10) par l'entrée (48) de la matière ; - introduction d'un oxydant dans la zone réactionnelle (10) par le point d'introduction (46), oxydation de la matière organique par les nitrates qui sont réduits en étant convertis en diazote dans les conditions supercritiques d'oxydation hydrothermale dans la zone d'anoxie (20), l'oxydation des déchets étant parachevée dans la zone d'oxydation en aval de la zone d'anoxie (20) et de l'entrée de l'oxydant (46).

## Patentansprüche

1. Verfahren zur Oxidationsbehandlung von Abfällen, umfassend ein organisches Material und Nitrate, in einer Reaktionsumgebung, umfassend Wasser im superkritischen Zustand bei einem Druck von mehr als 221 Bar und einer Temperatur von mehr als 374°C in einem Reaktor, umfassend einen Körper (2), der eine Reaktionszone (10) begrenzt, einen Eingang (48) für das zu behandelnde Material in die Reaktionszone (10), einen Einführungspunkt (46) eines Oxidationsmittels in die Reaktionszone (10), wenigstens einen Ausgang des behandelten Materials aus der Reaktionszone (10) heraus, wobei das zu behandelnde Material in der Reaktionszone zwischen ihrem Eingang und ihrem Ausgang einem definierten Weg folgt, wobei der Einführungspunkt (46) des Oxidationsmittels in die Reaktionszone (10) stromabwärts des Eingangs (48) des Materials angeordnet ist und von diesem Letztgenannten in einem bestimmten Abstand derart beabstandet ist, dass eine Anoxiezone (20) definiert wird, die enthalten ist zwischen dem Eingang des zu behandelnden Materials und dem Einführungspunkt des Oxidationsmittels, in welcher Zone die Fluidumgebung in Anoxie ist, wobei der Reaktor ein Innenrohr (15) umfasst, das mit dem Körper (2) an einem ersten Ende verbunden ist, wobei das Innenvolumen des Innenrohrs eine zentrale Zone (20) begrenzt, wobei das Innenrohr eine ringförmige Zone (22) mit dem Körper (2) begrenzt, wobei ein Durchgang zur Kommunikation zwischen der zentralen Zone (20) des Rohrs und der ringförmigen Zone (22) an einem zweiten Ende (15a) des Innenrohrs vorgesehen ist, wobei der Eingang (48) des zu behandelnden Materials in die zentrale Zone (20) des Innenrohrs an der Seite seines ersten Endes mündet, wobei der Einführungspunkt (46) des Oxidationsmittels benachbart zu dem zweiten Ende (15a) des Innenrohrs angeordnet ist, wobei die Oxidationszone stromabwärts der Anoxiezone (20) in der ringförmigen Zone (22) angeordnet ist, wobei das Behandlungsverfahren die folgenden Schritte umfasst:
- Einführen eines zu behandelnden Materials in die Reaktionszone (10) durch den Eingang (48) des Materials;
- Einführen eines Oxidationsmittels in die Reaktionszone (10) durch den Einführungspunkt (46), Oxidation des organischen Materials durch die Nitrate, die reduziert werden, indem sie in Distickstoff umgewandelt werden in den superkritischen hydrothermalen Oxidationsbedingungen in der Anoxiezone (20), wobei die Oxidation der Abfälle in der Oxidationszone stromabwärts der Anoxiezone (20) und des Eingangs des Oxidationsmittels (46) vollendet wird.

## Claims

1. A method for treating through oxidation waste containing an organic material and nitrates in a reaction medium comprising water in the supercritical state at a pressure higher than 221 bar and a temperature higher than 374°C in a reactor comprising a body (2) delimiting a reaction zone (10), an inlet (48) for the material to be treated in the reaction zone (10), an introduction point (46) for an oxidant in the reaction zone (10), at least one outlet for the material treated outside the reaction zone (10), the material to be treated travelling a defined path in the reaction zone between its inlet and its outlet, the introduction point (46) for the oxidant into the reaction zone (10) being located downstream of the inlet (48) of the material and is spaced apart from the same by some distance so as to define an anoxia zone (20) between the inlet of the material to be treated and the introduction point for the oxidant, in which zone the fluid medium is in anoxia, the reactor comprising an inner tube (15) connected to the body (2) at a first end, the internal volume of the inner tube delimiting a central zone (20), the inner tube delimiting an annular zone (22) with the body (2), a communication passage between the central zone (20) of the tube and the annular zone (22) being provided at a second end (15a) of the inner tube, the inlet (48) of the material to be treated opening into the central zone (20) of the inner tube, on its first end side, the introduction point (46) for the oxidant being located in the vicinity of the second end (15a) of the inner tube, the oxidation zone being located downstream of the anoxia zone (20) in the annular zone (22), the treating method comprising the following steps of:
- introducing a material to be treated into the reaction zone (10) through the inlet (48) of the material;
- introducing an oxidant into the reaction zone (10) through the introduction point (46), oxidising the organic material by the nitrates which are reduced by being converted into nitrogen under supercritical hydrothermal oxidation conditions in the anoxia zone (20), the oxidation of the waste being completed in the oxidation zone downstream of the anoxia zone (20) and of the oxidant inlet (46).
